(19) Europäisches Patentamt
European Patent Office
Office européen des brevets

(11) **EP 3 984 349 A1**

(12) **EUROPEAN PATENT APPLICATION**
published in accordance with Art. 153(4) EPC

(43) Date of publication:
**20.04.2022 Bulletin 2022/16**

(21) Application number: **20826202.2**

(22) Date of filing: **29.05.2020**

(51) International Patent Classification (IPC):
**A01G 7/00** (2006.01)

(52) Cooperative Patent Classification (CPC):
**A01G 7/00**

(86) International application number:
**PCT/JP2020/021367**

(87) International publication number:
**WO 2020/255678 (24.12.2020 Gazette 2020/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.06.2019 JP 2019111699**

(71) Applicant: **Bayer CropScience K.K.
Tokyo 100-8268 (JP)**

(72) Inventors:
• **ITO Satoshi
Tokyo 150-8360 (JP)**
• **VICTORIA Smart
Tokyo 150-8360 (JP)**
• **BANSAL Mehul
71272 Renningen (DE)**

(74) Representative: **BIP Patents
c/o Bayer Intellectual Property GmbH
Alfred-Nobel-Straße 10
40789 Monheim am Rhein (DE)**

(54) **INFORMATION PROCESSING DEVICE AND METHOD**

(57) The purpose of the present invention is to improve the accuracy of prediction of an environmental condition using a simple structure. An information processing device (40) is provided with: an information acquisition unit (421) for acquiring prediction information for weather conditions outside of a greenhouse and cultivation information for a crop in the greenhouse; and a prediction unit (423) for predicting an environmental condition inside of the greenhouse on the basis of the prediction information for weather conditions and the cultivation information.

Fig. 2

## Description

## Technical Field

The present invention relates to an information processing device and method.

## Background Art

In protected horticulture in a plastic greenhouse, environmental conditions inside the plastic greenhouse are predicted. By predicting the environmental conditions, it is possible to predict yields of produce and risks of pest damage. A measure which involves adjusting the environmental conditions inside the plastic greenhouse by means of air conditioning or the like is also feasible in order to avoid the risk of predicted pest damage.

For example, the situation inside a plastic greenhouse is predicted on the basis of past performance of a control device installed in the plastic greenhouse, and sensor information obtained by means of sensors inside the plastic greenhouse (see Patent Document 1). Furthermore, a greenhouse is temperature-controlled on the basis of input from an external air sensor, a greenhouse-internal temperature sensor, and a sunlight sensor, etc. (see

Patent Document 2).

## Prior Art Documents

## Patent Documents

Patent Document 1: JP 2018-99067 A
Patent Document 2: JP 2002-48354 A

## Summary of the Invention

## Problems to be Solved by the Invention

Weather conditions outside plastic greenhouses have a considerable effect on the environmental conditions inside the plastic greenhouses, but providing sensors around each plastic greenhouse in order to measure the weather conditions entails introduction and maintenance costs. Furthermore, even if sensors are provided, when predictions are made for several days ahead or several weeks ahead, there are considerable changes in the weather during that time, and it is difficult to improve the prediction accuracy by measurement values of sensors alone.

The objective of the present invention lies in improving the accuracy of predicting environmental conditions by means of a simple configuration.

## Means for Solving the Problems

One mode of the present invention provides an information processing device (40) comprising: an information acquisition unit (421) for acquiring prediction information of a weather condition outside a plastic greenhouse, and cultivation information of produce inside the plastic greenhouse; and a prediction unit (423) for predicting an environmental condition inside the plastic greenhouse on the basis of the prediction information of the weather condition and the cultivation information.

Another mode of the present invention provides a method for predicting an environmental condition inside a plastic greenhouse, the method comprising: a step of acquiring prediction information of a weather condition outside the plastic greenhouse, and cultivation information of produce inside the plastic greenhouse; and a step of predicting the environmental condition inside the plastic greenhouse on the basis of the prediction information of the weather condition and the cultivation information.

## Advantage of the Invention

The present invention makes it possible to improve the accuracy of predicting environmental conditions by means of a simple configuration.

## Brief Description of the Drawings

[Fig. 1] is a diagram showing a configuration of an information provision system comprising an information processing server according to the present mode of embodiment.
[Fig. 2] is a diagram showing a configuration of the information processing server.
[Fig. 3] is a flowchart showing a processing sequence by which the information processing server generates a prediction model.
[Fig. 4] is a flowchart showing a processing sequence by which the information processing server predicts an environmental condition inside a plastic greenhouse.

## Mode for Implementing the Invention

A mode of embodiment of the information processing device and method according to the present invention will be described below with reference to the drawings. The configuration described below is an example (representative example) of one mode of embodiment of the present invention, and the present invention is not limited to the configuration described below.

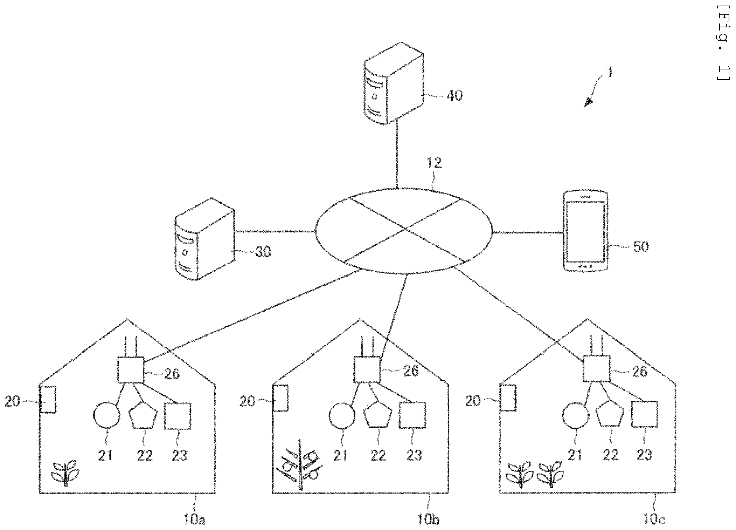

Fig. 1 shows an information provision system 1 according to a mode of embodiment of the present invention.

The information provision system 1 predicts environmental conditions inside plastic greenhouses 10a-10c on the basis of prediction information of weather conditions outside the plastic greenhouses 10a-10c, and cultivation information of produce inside the plastic greenhouses 10a-10c. Fig. 1 shows an example in which prediction information for the three plastic greenhouses 10a-10c is provided, but there is no particular limitation as to the number of plastic greenhouses which may be provided with the prediction information, and the prediction information may be provided to one or more plastic greenhouses.

As shown in fig. 1, the information provision system 1 comprises: a plurality of sensors 21-23, a communication device 26, a weather server 30, an information processing server 40, and a user terminal 50. The communication device 26, weather server 30, information processing server 40 and user terminal 50 are communicably connected to one another via a network 12. The network 12 may comprise the Internet, a telephone network, or a LAN (local area network), etc.

The sensors 21-23 are provided inside the plastic greenhouses 10a-10c, and measure environmental conditions inside the plastic greenhouses 10a-10c at fixed intervals of 10 minutes or the like, for example. Examples of environmental conditions which may be cited include: temperature, relative humidity, solar irradiance, carbon dioxide concentration, wind speed, terrestrial heat, and soil moisture content, etc. In this mode of embodiment, the sensor 21 measures temperature, the sensor 22 measures relative humidity, and the sensor 23 measures solar irradiance, but sensors for measuring other environmental conditions such as carbon dioxide concentration may equally be provided.

The communication device 26 sends the temperature, relative humidity and solar irradiance, etc. measured by means of the respective sensors 21-23 to the information processing server 40 as measurement information of the environmental conditions inside the plastic greenhouses 10a-10c.

Furthermore, a control device 20 for adjusting the environmental conditions may be provided inside the plastic greenhouses 10a-10c. The communication device 26 may acquire required information from the control device 20 to generate operating information of the control device 20, and may send this operating information to the information processing server 40. An example of the control device 20 which may be cited is a device for controlling opening and closing of an air conductor, a sprinkler, a sun-shading curtain, or a window, etc.

Communication between the communication device 26 and the sensors 21-23 and control device 20 takes place by wireless communication such as BLE (Bluetooth (registered trademark) Low Energy), or Wi-Fi (registered trademark), but wired communication is equally possible.

The weather server 30 sends prediction information of weather conditions outside the plastic greenhouses 10a-10c to the information processing server 40.

Examples of weather conditions which may be cited include air temperature, relative humidity, solar irradiance, rainfall, and wind speed, etc. in each region. The prediction information may be a weather forecast. The weather server 30 may send not only prediction information to the information processing server 40, but also measurement information of weather conditions measured around the plastic greenhouses 10a-10c.

The information processing server 40 is an information processing device which acquires the prediction information of the weather conditions outside the plastic greenhouses 10a-10c, and cultivation information of produce inside the plastic greenhouses 10a-10c, and predicts the environmental conditions inside the plastic greenhouses 10a-10c on the basis of the prediction information and cultivation information acquired. The information processing server 40 is capable of generating and outputting the prediction information of the environmental conditions on the basis of a prediction result.

The user terminal 50 is a mobile telephone, a tablet, or a PC (personal computer), etc., for example. The user terminal 50 is used by a user such as a farmer managing the plastic greenhouses 10a-10c, and displays the prediction information sent from the information processing server 40.

(Information processing server)

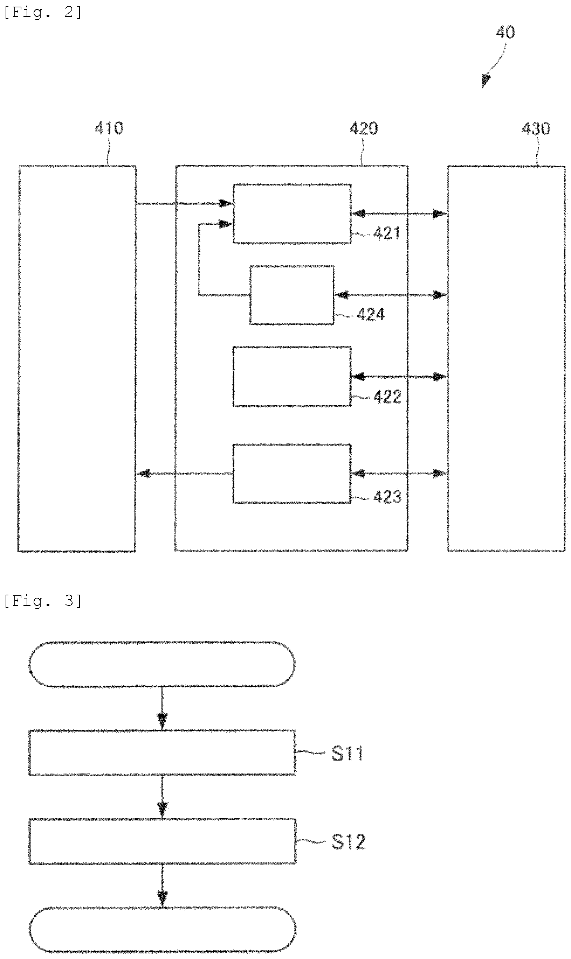

Fig. 2 shows an exemplary configuration of the information processing server 40.

As shown in fig. 2, the information processing server 40 comprises a communication unit 410, a control unit 420, and a memory unit 430.

The communication unit 410 is an interface for communicating with external devices on the network 12, such as the communication device 26, the weather server 30, and the user terminal 50.

The control unit 420 controls operation of the information processing server 40.

Furthermore, the control unit 420 makes predictions of the environmental conditions inside the plastic greenhouses 10a-10c. For the purposes of this prediction, the control unit 420 comprises an information acquisition unit 421, a learning unit 422, a prediction unit 423 and an information estimation unit 424, as shown in fig. 2. The information acquisition unit 421, the learning unit 422, the prediction unit 423 and the information estimation unit 424 may be realized by means of software processing in which a processor such as a CPU (central processing unit) executes a program stored in the memory unit 430 or another recording medium such as a memory, or the above units may be realized by means of hardware such as an ASIC (application specific integrated circuit).

The information acquisition unit 421 acquires the prediction information of the weather conditions from the weather server 30 via the communication unit 410, and acquires the cultivation information of the produce in each plastic greenhouse 10a-10c estimated by means of the information estimation unit 424. The cultivation information is information relating to cultivation conditions of the produce. The information acquisition unit 421 saves the acquired items of information in the memory unit 430.

Furthermore, the information acquisition unit 421 may acquire measurement information of the environmental conditions inside the plastic greenhouses 10a-10c and operating information of the control device 20 from the communication device 26, and may acquire the measurement information of the weather conditions from the weather server 30. The information acquisition unit 421 may acquire the measurement information at predetermined intervals, such as intervals of 10 minutes, for example.

When the prediction information of the weather conditions and the cultivation information saved in the memory unit 430 are input to the learning unit 422, the learning unit 422 generates a prediction model for outputting a prediction result of the environmental conditions inside the plastic greenhouses. The prediction model generated is saved in the memory unit 430.

The prediction unit 423 predicts the environmental conditions inside the plastic greenhouses 10a-10c on the basis of the prediction information of the weather conditions and the cultivation information acquired by means of the information acquisition unit 421. Specifically, the prediction unit 423 inputs the prediction information of the weather conditions and the cultivation information to the prediction model generated by means of the learning unit 422 and can thereby acquire a prediction result of the environmental conditions inside the plastic greenhouses 10a-10c.

The information estimation unit 424 generates the cultivation information by estimating a cultivation state of the produce inside the plastic greenhouses. The information estimation unit 424 may generate the cultivation information at any observation time in accordance with a request from the information acquisition unit 421, and may provide this cultivation information to the information acquisition unit 421.

The memory unit 430 stores the various items of information acquired by means of the information acquisition unit 421, specifically, the prediction information and measurement information of the weather conditions, measurement information of the environmental conditions inside the plastic greenhouses 10a-10c, and cultivation information of the produce, etc.

Furthermore, the memory unit 430 stores the prediction model generated by means of the learning unit 422. A large-capacity storage medium such as a hard disk may be used as the memory unit 430.

(Processing by the information processing server)

The information processing server 40 generates the prediction model from past measurement information of the weather conditions and cultivation information, and predicts the environmental conditions inside the plastic greenhouses 10a-10c by means of the prediction model generated.

Fig. 3 shows a processing sequence by which the information processing server 40 generates the prediction model.

As shown in fig. 3, the information acquisition unit 421 of the information processing server 40 acquires the information required to generate the prediction model. Specifically, the information acquisition unit 421 acquires the measurement information of the weather conditions outside the plastic greenhouses 10a-10c from the weather server 30. Furthermore, the information acquisition unit 421 acquires the cultivation information of the produce inside the plastic greenhouses 10a-10c from the information estimation unit 424, and acquires the measurement information of the environmental conditions inside the plastic greenhouses 10a-10c from the communication device 26 (step S11).

The cultivation information is information relating to cultivation conditions of the produce, and includes at least one item of information from among the type of produce, cultivation amount, growth condition, and cultivation ground, for example. The type of produce is a category such as cucumber or tomato, for example. Examples of the cultivation amount that may be cited include the area of the cultivated land, number of plants, and planting density in the plastic greenhouses 10a-10c. The planting density may be calculated by dividing the number of plants by the area of the cultivated land. Examples of growth conditions that may be cited include the number of days elapsed from the planting date, and a growth stage estimated from the number of days since planting. The cultivation ground is a category such as soil culture or water culture, for example.

This cultivation information is information which is input from the user terminal 50, for example, and saved in advance in the memory unit 430 of the information processing server 40. The information estimation unit 424 generates the cultivation information at any observation time by estimating a subsequent cultivation state from the cultivation information which was initially saved. Specifically, the information estimation unit 424 determines the growth stage by counting the number of days elapsed from the planting date, which is in the cultivation information, until the observation time as the number of days since planting, and comparing the number of days since planting with a threshold.

Next, the learning unit 22 generates the prediction model for outputting the prediction result of the environmental conditions inside the plastic greenhouses (step S12). The prediction model may be a prediction formula for outputting predicted values of the temperature and humidity, etc. inside the plastic greenhouses 10a-10c by using, as variables, the prediction information of the weather conditions and the cultivation information, etc., or the prediction model may be a table in which predicted values are pre-established in relation to variables.

The functions represented by the following formulae (1) and (2) may be used for the prediction formula, for example.

$$(1) \quad T_{in}=A_1 \times T^3_{out}+A_2 \times S+Z_1(t)$$

$$(2) \quad H_{in}=B_1 \times A_{out}+B_2 \times S+Z_2(t)+M(t)$$

The variables are defined as follows in the formulae (1) and (2) above.

$T_{in}$: predicted value of the temperature inside the plastic greenhouse

$T_{out}$: predicted value of the temperature outside the plastic greenhouse

S: predicted value of solar irradiance outside the plastic greenhouse

$Z_1(t)$ and $Z_2(t)$: coefficients corresponding to the time of predicting the environmental conditions $A_1$, $A_2$, $B_1$ and $B_2$: coefficients

$H_{in}$: predicted value of the relative humidity inside the plastic greenhouse

$H_{out}$: predicted value of the relative humidity outside the plastic greenhouse

$M(t)$ : coefficient corresponding to the month to which the time of predicting the environmental conditions belongs

Values determined by means of machine learning, for example, may be used as $A_1$, $A_2$, $B_1$, $B_2$, $Z_1(t)$, $Z_2(t)$ and $M(t)$ above.

Furthermore, the prediction model may be a model which is generated by means of machine learning, by using, as input data, the measurement information of the weather conditions and the cultivation information, and by using, as teaching data, the measurement information of the environmental conditions inside the plastic greenhouses 10a-10c. A prediction model afforded by machine learning has a higher prediction accuracy and is therefore preferable.

Examples of machine learning for generating the prediction model that may be cited include: linear regression, a filter such as a Kalman filter, a support vector machine, a decision tree such as a random forest, a nearest neighbor method, a neural network such as deep learning, and a Bayesian network. One of the above types of machine learning may be used alone, or two or more may be combined for use. The type of machine learning may be appropriately selected in accordance with characteristics thereof. For example, a Kalman filter makes it possible to adjust parameters constituting the prediction model in such a way as to reduce differences between prediction data and measurement information, while also readily responding to changes in environmental conditions over time. Furthermore, a neural network is better able to respond to non-linear changes than a linear model or a Kalman filter, and can also easily respond to sudden modifications of temperature settings by the control device 20, etc.

The learning unit 422 may use time information indicating an observation time of the measurement information of the weather conditions and the cultivation information as one item of input data, and may use time information indicating an observation time of the measurement information of the environmental conditions as teaching data. For example, when measurement information of the weather conditions measured at 17:00 hours on April 5 has been acquired by the information acquisition unit 421, the learning unit 422 uses time information for 17:00 hours on April 5 as one item of input data. The learning unit 422 may also use time information at a time measured in the same way for the environmental conditions as one item of input data. The observation time of the cultivation information is a time at which the cultivation state was estimated by means of the information estimation unit 424.

Solar irradiance may be present or absent, and temperature differences may arise over the course of a day, and environmental conditions such as temperature and humidity in the interior of the plastic greenhouses 10a-10c also fluctuate with the seasons throughout the year, so it is possible to further improve the prediction accuracy of the environmental conditions at a time for which a prediction is to be made by using time information. It should be noted that when the time information is information including not only the time of day but also the month and date, as indicated above, it is possible to make a prediction using a pattern of chronological changes in environmental conditions for a longer span. The time information is not limited to a specific time of day, and may equally be information indicating a time slot such as 17:00 hours to 19:00 hours.

The learning unit 422 may generate the prediction model by using, as input data, information affecting the environmental conditions inside the plastic greenhouses, in addition to the abovementioned measurement information of the weather conditions and cultivation information. By using multiple items of information, it is possible to make a comprehensive prediction, further improving the prediction accuracy.

For example, the information acquisition unit 421 may further acquire identification information of the plastic greenhouses 10a-10c, and the learning unit 422 may further use the identification information of the plastic greenhouses as one item of input data. Specifically, when the information acquisition unit 421 acquires the measurement information of the weather conditions and the cultivation information around the plastic greenhouse 10a, it also acquires the identification information of the plastic greenhouse 10a. The environmental conditions inside the plastic greenhouses vary according to an installation location of the individual plastic greenhouses, a structure thereof, whether or not a control device is installed therein, or the performance of such a control device, etc., so the prediction accuracy of the environmental conditions of each plastic greenhouse 10a-10c can be further improved by using identification information of the plastic greenhouses.

The environmental conditions inside the plastic greenhouses may be similar, depending on the region in which the plastic greenhouses are installed, the size thereof, and installation conditions such as equipment, so the plastic greenhouses 10a-10c may be grouped according to the installation conditions thereof. For example, when the plastic greenhouses 10a and 10c are installed in the same region and the sizes thereof are also within a certain range, the plastic greenhouses 10a and 10c are classified in the same group, and identification information for the same group is provided thereto. The provision of groupings and identification information may be performed by the learning unit 422 by means of machine learning, for example, or it may be performed manually by a manager of the information processing server 40. When a group classification is made in this way, the information acquisition unit 421 may further acquire identification information of the group to which each of the plastic greenhouses 10a-10c belongs, and the learning unit 422 may further use the group identification information as one item of input data. By using the group identification information, it is possible to further improve the prediction accuracy of the environmental conditions of the plastic greenhouses 10a-10c belonging to each group. Furthermore, if the measurement information also includes noise, the effect of the noise can be reduced because a prediction is made in accordance with a group tendency.

Furthermore, the information acquisition unit 421 may further acquire operating information of the control device 20 from the communication device 26, and the learning unit 422 may further use the operating information as one item of input data. Examples of the operating information that may be cited include: whether or not a control device 20 is installed, the type of control device 20, an operating condition indicating whether the control device 20 is stopped or operating, a target temperature, and a target humidity, etc. Operation of the control device 20 alters the environmental conditions inside the plastic greenhouses 10a-10c, so it is possible to further improve the prediction accuracy of the environmental conditions of the plastic greenhouses 10a-10c by using this operating information to generate the prediction model.

The learning unit 422 preferably updates the prediction model saved in the memory unit 430 by performing the abovementioned processing periodically or at any time. As a result, predictions based on the most recent trends can be made.

Furthermore, the information acquisition unit 421 acquires the prediction information of the weather conditions at a prediction time which will be described later and the cultivation information, after which the information acquisition unit 421 acquires the measurement information of the environmental conditions at the prediction time of the weather conditions, and may also update the prediction model by using this prediction information as input data and by using this measurement information as teaching data. In this case, the prediction model may be corrected in such a way as to reduce any divergence between the prediction data and the measurement information.

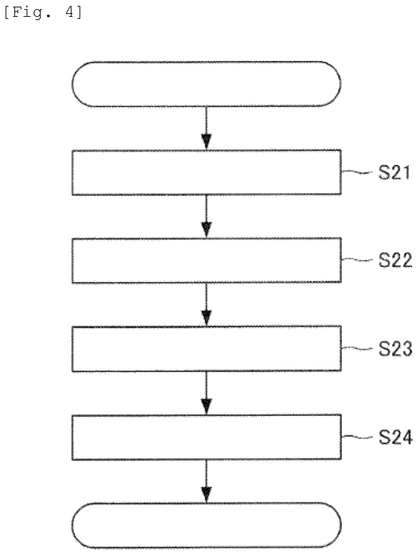

Fig. 4 shows the processing sequence by which the information processing server 40 predicts the environmental conditions inside the plastic greenhouses 10a-10c.

As shown in fig. 4, the prediction unit 423 in the information processing server 40 receives an instruction as to which plastic greenhouse will be the subject of a prediction by the prediction unit 423. The prediction unit 423 may also receive an instruction of the time for which the prediction is to be made (step S21). The instruction may be received from the user terminal 50, or, when predictions are made at fixed time intervals, the instruction may be automatically received while the time for which the prediction is to be made is changed at the fixed time intervals.

Next, the information acquisition unit 421 acquires the prediction information of the weather conditions from the weather server 30. The prediction information of the weather conditions is not only information which has actually been measured, but also predicted information, such as a weather forecast, for example. Furthermore, the information acquisition unit 421 acquires from the information estimation unit 424 the cultivation information at the time for which the prediction is to be made in the designated plastic greenhouse (step S22).

The prediction unit 423 inputs, to the prediction model, the acquired prediction information of the weather conditions, cultivation information, and time information indicating the time for which a prediction is to be made, and thereby acquires a prediction result of the environmental conditions inside the plastic greenhouse at the time for which a prediction is to be made (step S23). The prediction unit 423 generates and outputs prediction information of the environmental conditions in accordance with the prediction result (step S24).

Examples of the prediction information which may be cited include predicted values of the temperature, relative humidity, solar irradiance, carbon dioxide concentration and soil water content, etc. inside the plastic greenhouse at the designated time, or a graph of those predicted values, etc. In order to predict changes in the environmental conditions, the prediction unit 423 may also generate, as the prediction information, a graph of predicted values obtained by shifting the prediction times by fixed time units such as one day.

Furthermore, the prediction information may be sent to the control device 20 of the plastic greenhouse for which a prediction has been made, and may be used for controlling the environmental conditions inside that plastic greenhouse, and the prediction information may equally be sent to the user terminal 50 and displayed thereon so that the user can inspect the prediction information.

As described above, the information processing server 40 according to this mode of embodiment uses the prediction information of the weather conditions and the cultivation information in order to predict the environmental conditions inside the plastic greenhouses 10a-10c. Prediction information such as a weather forecast is sufficient for the weather conditions, and there is no need for measurement devices such as sensors. The cultivation information is inferred, so there is no need to input cultivation information each time a prediction is made, as long as basic information is input once, and therefore predictions can be made using a simple configuration. Furthermore, the predictions are made on the basis of not only current weather conditions, but also prediction information of the weather conditions, while predictions are also made on the basis of the cultivation information which has a considerable effect on the environmental conditions inside the plastic greenhouses 10a-10c, and as a result it is possible to improve the prediction accuracy of the environmental conditions.

A preferred mode of embodiment of the present invention was described above, but the present invention is not limited by this mode of embodiment, and a number of variations and modifications may be made within the scope of the essential point thereof.

For example, the learning unit 422 may be provided in an external device such as another server, rather than in the information processing server 40, and the information processing server 40 may acquire the prediction model generated in the external device and store the prediction model in the memory unit 430.

**Key to Symbols**

1... Information provision system, 10a-10c... Plastic greenhouse, 21-23... Sensor, 26... Communication device, 30... Weather server, 40... Information processing server, 421... Information acquisition unit, 422... Learning unit, 423... Prediction unit, 424... Information estimation unit

**Claims**

1. An information processing device (40) comprising:

    an information acquisition unit (421) for acquiring prediction information of a weather condition outside a plastic greenhouse, and cultivation information of produce inside the plastic greenhouse; and
    a prediction unit (423) for predicting an environmental condition inside the plastic greenhouse on the basis of the prediction information of the weather condition and
    the cultivation information.

2. The information processing device (40) as claimed in claim 1, wherein the information acquisition unit (421) acquires identification information of the plastic greenhouse, and
the prediction unit (423) makes a prediction of the environmental condition on the basis of the prediction information of the weather condition, the cultivation information, and the identification information of the plastic greenhouse.

3. The information processing device (40) as claimed in claim 1 or 2, wherein, when plastic greenhouses have been grouped according to an installation condition of the plastic greenhouses, the information acquisition unit (421) acquires identification information of the group to which a plastic greenhouse belongs, and
the prediction unit (423) makes a prediction of the environmental condition on the basis of the prediction information of the weather condition, the cultivation information, and the group identification information.

4. The information processing device (40) as claimed in any one of claims 1 to 3, wherein the information acquisition unit (421) acquires operating information of a control device (20) for controlling the environmental condition in the plastic greenhouse, and
the prediction unit (423) makes a prediction of the environmental condition on the basis of the prediction information of the weather condition, the cultivation information, and the operating information.

5. The information processing device (40) as claimed in any one of claims 1 to 4, wherein the cultivation information includes at least one item of information from among the type of produce, a cultivation amount, a growth state, and a cultivation ground.

6. The information processing device (40) as claimed in any one of claims 1 to 5, wherein, when the prediction unit (423) receives as input a plurality of items of information including the prediction information of the weather condition, the cultivation information, and time information indicating a time for which a prediction is to be made, said prediction unit (423) makes a prediction of the environmental condition inside the plastic greenhouse by using a prediction model which outputs a prediction result of the environmental condition inside the plastic greenhouse for the time for which a prediction is to be made.

7. The information processing device (40) as claimed in claim 6, comprising a learning unit for generating the prediction model by means of machine learning, by using, as input data, a plurality of items of information including measurement information of the weather condition outside the plastic greenhouse and the cultivation information inside the plastic greenhouse, and time information indicating an observation time of the measurement information and the cultivation information, and by using, as teaching data, measurement information of the environmental condition inside the greenhouse and time information indicating an observation time of that measurement information.

8. A method for predicting an environmental condition inside a plastic greenhouse, the method comprising:

a step of acquiring prediction information of a weather condition outside the plastic greenhouse, and cultivation information of produce inside the plastic greenhouse; and
a step of predicting the environmental condition inside the plastic greenhouse on the basis of the prediction information of the weather condition and the cultivation information.

[Fig. 1]

[Fig. 2]

40

410    420    430

421

424

422

423

[Fig. 3]

S11

S12

[Fig. 4]

## INTERNATIONAL SEARCH REPORT

| International application No. |
| --- |
| PCT/JP2020/021367 |

**A. CLASSIFICATION OF SUBJECT MATTER**
A01G7/00(2006.01)i
FI: A01G7/00 603

According to International Patent Classification (IPC) or to both national classification and IPC

**B. FIELDS SEARCHED**

Minimum documentation searched (classification system followed by classification symbols)
A01G7/00

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2018-99067 A (NEPON INC.) 28.06.2018 (2018-06-28) claims 1, 2, paragraphs [0015]-[0019] | 1, 4-6, 8 |
| Y | claims 1, 2, paragraphs [0015]-[0019] | 2-7 |
| Y | JP 2015-62395 A (HITACHI SOLUTIONS, LTD.) 09.04.2015 (2015-04-09) paragraph [0020] | 2-7 |
| Y | WO 2018/047726 A1 (BOSCH CORPORATION) 15.03.2018 (2018-03-15) claims | 7 |
| A | JP 2015-72506 A (NEPON INC.) 16.04.2015 (2015-04-16) entire text, all drawings | 1-8 |

☐ Further documents are listed in the continuation of Box C.  ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 06 August 2020 (06.08.2020) | 18 August 2020 (18.08.2020) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

## INTERNATIONAL SEARCH REPORT
Information on patent family members

| International application No. |
| --- |
| PCT/JP2020/021367 |

| Patent Documents referred in the Report | Publication Date | Patent Family | Publication Date |
| --- | --- | --- | --- |
| JP 2018-99067 A | 28 Jun. 2018 | (Family: none) | |
| JP 2015-62395 A | 09 Apr. 2015 | (Family: none) | |
| WO 2018/047726 A1 | 15 Mar. 2018 | EP 3550498 A1 claims CN 109643431 A KR 10-2019-0046841 A | |
| JP 2015-72506 A | 16 Apr. 2015 | (Family: none) | |

Form PCT/ISA/210 (patent family annex) (January 2015)

**REFERENCES CITED IN THE DESCRIPTION**

**Patent documents cited in the description**

- JP 2018099067 A

- JP 2002048354 A